# EUROPÄISCHE PATENTSCHRIFT

(11) **EP 2 402 202 B1**
(45) Veröffentlichungstag und Bekanntmachung des Hinweises auf die Patenterteilung: **14.06.2017**
(21) Anmeldenummer: 11005133.1
(22) Anmeldetag: 24.06.2011
(51) Int. Cl.: B60K 35/00, B60K 37/06, B60W 50/08, B60W 50/00

(54) **Verfahren zum Betrieb eines wenigstens eine Information an einen Fahrer ausgebende und/oder Informationen von einem Fahrer entgegennehmende Funktionalität aufweisenden Fahrzeugsystems eines Kraftfahrzeuges**
Method for operating a vehicle system of a motor vehicle comprising at least one functionality providing information to a driver and/or receiving information from a driver
Procédé de fonctionnement d'un système automobile d'un véhicule comprenant une fonctionnalité émettant au moins une information à un conducteur et/ou recevant des informations d'un conducteur

(30) Priorität: 02.07.2010 DE 102010025894
(43) Veröffentlichungstag der Anmeldung: 04.01.2012
(73) Patentinhaber: Audi AG, 85045 Ingolstadt (DE); Audi Electronics Venture GmbH, 85080 Gaimersheim (DE)
(72) Erfinder: Wischhof, Lars, Dr., 85051 Ingolstadt (DE); Ebner, André, Dr., 85051 Ingolstadt (DE)
(74) Vertreter: Thielmann, Frank

(56) Entgegenhaltungen:
- WO-A1-2010/057776
- JP-A- 2005 182 191

## Beschreibung

Die Erfindung betrifft ein Verfahren zum Betrieb eines wenigstens eine Informationen an einen Fahrer ausgebende und/oder Informationen von einem Fahrer entgegennehmende Funktionalität aufweisenden Fahrzeugsystems eines Kraftfahrzeugs und ein zugehöriges Kraftfahrzeug.

Moderne Kraftfahrzeuge weisen häufig Fahrzeugsysteme, beispielsweise Fahrerassistenzsysteme, auf, die Informationen des Fahrers entgegennehmen und/oder Informationen an den Fahrer ausgeben, wobei der Begriff der Informationen hier weit zu verstehen ist und beispielsweise auch Unterhaltungswiedergaben umfasst, beispielsweise Musik, Videos und dergleichen. Solche Systeme werden häufig auch als Infotainment-Systeme bezeichnet.

Ein Beispiel für ein solches Infotainment-System ist ein Fahrzeugsystem, welches den Zugriff auf das Internet innerhalb des Kraftfahrzeugs ermöglicht. Hierfür kann beispielsweise eine serverbasierte Infrastruktur verwendet werden. Ein derartiger Internetzugang im Kraftfahrzeug ermöglicht eine Vielzahl von Anwendungen. So können beispielsweise über eine Online-Datenverbindung Informationen zum Wetter, Reiseinformationen zu interessanten Orten in der Umgebung oder auch Nachrichten abgerufen werden. Zusätzlich hat der Fahrer beispielsweise von daheim aus die Möglichkeit, sich vorab Navigationsziele an das Kraftfahrzeug zu senden oder eine Routenplanung vorzunehmen. Zur Darstellung solcher Informationen aus dem Internet kann dem entsprechenden Fahrzeugsystem (Infotainment-System) eine Darstellungseinrichtung, beispielsweise ein Monitor bzw. Bildschirm eines Mensch-Maschine-Interfaces, zugeordnet sein.

Zur besseren Darstellung der Internet-Informationen werden diese im Regelfall nicht direkt aus dem Internet abgerufen, da im Kraftfahrzeug nur ein relativ kleiner Bildschirm und nur begrenzte Eingabemöglichkeiten zur Verfügung stehen. Stattdessen ist es bekannt, solche Internet-Informationen über einen Zwischen-Server ("Server für die Anbindung") aus dem Internet abfragen zu lassen und für die Darstellung im Kraftfahrzeug aufzubereiten. Die entsprechend aufbereiteten Daten werden dann über eine Kommunikationsverbindung, beispielsweise über ein Mobilfunknetzwerk, an das Kraftfahrzeug gesendet und können dort dargestellt werden.

Eine besondere Herausforderung liegt hierbei in der Menge der für den Fahrer verfügbaren Informationen: Zum einen ist über die Onlinedienste eine große Menge an Informationen abrufbar, zum anderen darf der Fahrer nicht von seiner Fahraufgabe abgelenkt werden.

Es ist im Stand der Technik hierzu bekannt, dass Internetfunktionalitäten entweder während der Fahrt bedienbar sind oder komplett abgeschaltet werden. Ob eine Funktion während der Fahrt nutzbar ist oder nicht, ist im Kraftfahrzeug fest hinterlegt. Bedienbar während der Fahrt können beispielsweise Funktionen sein, die einen speziellen Bezug zur Fahraufgabe haben, beispielsweise navigationsbezogene Informationen, oder es kann vorgesehen sein, dass nur eine geringe Menge an Informationen angezeigt wird, beispielsweise nur so viele Informationen, wie auf einer Seite auf einer Darstellungsvorrichtung des Infotainmentsystems anzeigbar sind. Andere Funktionen hingegen sind nur im Stand bedienbar, beispielsweise der freie Zugang ins Internet.

Es ist also allgemein, auch bei anderen Fahrzeugsystemen, die mit einzugebenden oder darzustellenden Informationen arbeiten, üblich, fest im Kraftfahrzeug zu hinterlegen, ob diese Funktionalitäten bzw. Teilfunktionen dieser Funktionalitäten während der Fahrt nutzbar sind oder ob sie abgeschaltet werden.

Dieser Stand der Technik, bei dem eine Funktion oder gar die ganze Funktionalität entweder während der Fahrt verfügbar oder abschaltbar ist, welche Eigenschaft statisch als Teil der Fahrzeuginfotainmentsoftware hinterlegt ist, hat eine Vielzahl von Nachteilen. Zum einen ist es nicht möglich, eine an den Betriebszustand bzw. allgemein die Fahrsituation angepasste Darstellung der Onlinefunktion zu ermöglichen. Zum anderen tritt ein Problem auf, wenn sich die rechtlichen Randbedingungen für eine Funktionalität oder eine Funktion ändern. Wird beispielsweise vom Gesetzgeber gefordert, eine bestimmte Funktion nicht mehr während der Fahrt anzuzeigen, muss entweder die Funktion auf dem "Server für die Anbindung" komplett deaktiviert werden oder es muss ein Software-Update des Kraftfahrzeugs erfolgen.

JP 2005/182191 A betrifft ein System zur automatischen Geschwindigkeitssteuerung eines Kraftfahrzeugs, wobei der Fahrer dazu gezwungen werden soll, Geschwindigkeitsbegrenzungen zu beachten, wobei immer die aktuellen gesetzlichen Vorgaben berücksichtigt werden sollen. Mithin ist eine Recheneinrichtung mit dem Internet verbunden, in dem ein Überwachungsserver vorliegt. Die aktuelle Geschwindigkeit und die aktuelle Position des Kraftfahrzeugs werden periodisch an den Überwachungsserver geschickt, welcher das Geschwindigkeitslimit an der aktuellen Position des Kraftfahrzeugs ermittelt und entsprechend reagiert. Überschreitet die Geschwindigkeit des Kraftfahrzeugs die Geschwindigkeitsbegrenzung, wird ein Alarmsignal an die Recheneinrichtung gegeben, um den Fahrer zu warnen; wird das Alarmsignal ignoriert, wird ein Bremskommando an die Recheneinrichtung geschickt, so dass der Fahrer gezwungen wird, das Kraftfahrzeug entsprechend der Geschwindigkeitsbegrenzung zu betreiben.

WO 2010/057776 A1 offenbart eine Vorrichtung, ein System und ein Verfahren zum Autorisieren von Fahrzeug-Online-Diensten während der Fahrt. Eine solche Vorrichtung soll in einem Fahrzeug vorgesehen und derart ausgelegt sein, dass sie bestimmte Inhalte eines aufgerufenen Online-Dienstes in Abhängigkeit des Fahrzustandes darstellt oder nicht darstellt. Es wird mithin der Fahrzustand erfasst und die Autorisierung wird abhängig vom Fahrzustand festgestellt, wobei dann entweder eine Sperrung oder eine eingeschränkte oder eine vollständige Autorisierung des abgerufenen Online-Dienstes erfolgt. In der konkreten Ausbildung wird diese Autorisierung serverseitig durchgeführt. Diese beiden zitierten Dokumente offenbaren den Oberbegriff des Anspruchs 1.

Der Erfindung liegt daher die Aufgabe zugrunde, ein Steuerungsverfahren für ein Fahrzeugsystem, insbesondere ein Infotainment-System, anzugeben, welches die genannten Nachteile vermeidet und eine dynamische Ansteuerung von Funktionalitäten bzw. deren Funktionen während der Fahrt erlaubt. Zur Lösung dieser Aufgabe ist bei einem Verfahren der eingangs genannten Art erfindungsgemäß vorgesehen, dass wenigstens ein die Verfügbarkeit und/oder den Umfang der Funktionalität während einer Fahrt betreffender, auf den Betriebszustand des Kraftfahrzeugs bezogener Steuerungsparameter über eine Kommunikationsverbindung empfangen und bei der Steuerung des Fahrzeugsystems berücksichtigt wird, wobei der Steuerungsparameter die Unterscheidung von für die Funktionalität oder eine bestimmte Funktion oder Funktionsgruppe relevanten Betriebszuständen des Kraftfahrzeugs ermöglicht.

Es wird also vorgeschlagen, die Steuerung der Nutzbarkeit der Funktionalität während der Fahrt nicht mehr statisch in der Fahrzeugsoftware zu hinterlegen, sondern durch eine dynamische Ansteuerung zu ersetzen, indem wenigstens ein über eine Kommunikationsverbindung empfangener Steuerungsparameter genutzt wird. Dieser Steuerungsparameter ist auf den Betriebszustand des Kraftfahrzeugs bezogen, das bedeutet, anhand des Steuerungsparameters ist es möglich, für die Funktionalität und ihren Umfang bzw. die Verfügbarkeit relevante Betriebszustände des Kraftfahrzeugs zu unterscheiden. In einer einfachen Ausführungsform kann der Steuerungsparameter beispielsweise zur Unterscheidung eines Betriebszustands "Kraftfahrzeug steht still" und eines Betriebszustands "Kraftfahrzeug fährt" genutzt werden, es sind jedoch auch weitere, detailreicher unterscheidende Steuerungsparameter denkbar, worauf im Folgenden noch näher eingegangen werden wird.

Es wird beim vorliegenden Verfahren also dynamisch seitens der die über die Kommunikationsverbindung gesendeten Daten für das Kraftfahrzeug zur Verfügung stellenden Einrichtung entschieden, inwieweit eine Eingabe bzw. eine Darstellung von Informationen durch ein Fahrzeugsystem, insbesondere also ein Infotainment-System, möglich ist. Der Begriff der Kommunikationsverbindung ist im Rahmen der vorliegenden Erfindung weit zu verstehen; relevant ist nur, dass das Kraftfahrzeug bzw. das betroffene Fahrzeugsystem oder eine im Kraftfahrzeug vorgesehene Empfangsvorrichtung Daten, insbesondere den oder die Steuerungsparameter, über die Kommunikationsverbindung empfangen kann. Dabei kann es sich also zum einen um ein "broadcasting"-System handeln, also um Daten, die einer Vielzahl von Empfängern zur Verfügung gestellt werden, zudem kann die Kommunikationsverbindung im Allgemeinen selbstverständlich mehrere Kommunikationsabschnitte umfassen, beispielsweise einen drahtlosen Kommunikationsabschnitt bei der Übertragung zum Kraftfahrzeug selber, davor jedoch auch drahtgebundene Kommunikationsabschnitte und dergleichen.

Mittels des erfindungsgemäßen Verfahrens ist es also möglich, beispielsweise bei Änderungen der Rechtslage oder anderen, eine Anpassung notwendig machenden Vorkommnissen eine Anpassung der Funktionalität ohne eine Änderung am Kraftfahrzeug selber, insbesondere in der Software des Fahrzeugsystems, vorzunehmen. Es ergibt sich also eine große Flexibilität, da ein Eingriff am Kraftfahrzeug nicht mehr notwendig ist.

Konkret bestehen mehrere Möglichkeiten, wie der Steuerungsparameter über die Kommunikationsverbindung zur Verfügung gestellt werden kann. So kann zum einen vorgesehen sein, dass der Steuerungsparameter über die Kommunikationsverbindung kontinuierlich zur Verfügung gestellt wird. Eine solche Ausgestaltung kann beispielsweise gewählt werden, wenn eine "broadcasting"-Verbindung, beispielsweise ein Radio- oder Fernsehsender, verwendet wird, um den oder die Steuerungsparameter zusätzlich zu übertragen. Dann stehen die aktuellen Steuerungsparameter kontinuierlich zur Verfügung und die Funktionalität kann während der Fahrt geeignet angepasst werden. Denkbar ist es auch, dass der Steuerungsparameter über die Kommunikationsverbindung zu Beginn der Nutzung einer Funktionalität empfangen wird. Dies ist insbesondere bei einer serverbasierten Architektur, in der das Fahrzeugsystem über die oder eine weitere Kommunikationsverbindung eine Anfrage, beispielsweise nach Informationen, stellt, sinnvoll. Dann kann immer dann, wenn die Funktionalität genutzt werden soll und beispielsweise die Kommunikationsverbindung erst aufgebaut wird, ein Satz aktualisierter Steuerungsparameter empfangen werden. Besonders vorteilhaft ist es auch, wenn der Steuerungsparameter über die Kommunikationsverbindung mit einem, insbesondere jedem, Datensatz, insbesondere mit einer auszugebenden Information, insbesondere informationsspezifisch, empfangen wird. Es ist also auch denkbar, dass jedes mal, wenn Daten, beispielsweise von einem entsprechenden Server, empfangen werden, auch der oder die aktuellen Steuerungsparameter mit übermittelt werden. Auch so werden die Steuerungsparameter immer aktuell gehalten, was von besonderem Vorteil ist, wenn die Steuerungsparameter informationsspezifisch sind; das bedeutet, es wird auch innerhalb der Funktionalität - beispielsweise zwischen verschiedenen Funktionen - unterschieden, inwieweit diese während der Fahrt nutzbar sind. Möglich ist entsprechend auch eine Ausgestaltung, in der beim Empfang von Informationen nur der aktuelle, auf diese Informationen bezogene Steuerungsparameter mitempfangen wird. Ersichtlich sind verschiedenste Ausgestaltungen denkbar.

Allgemein sei an dieser Stelle noch angemerkt, dass als Kommunikationsverbindung mit besonderem Vorteil auch eine Kommunikationsverbindung eines Mobilfunknetzes, insbesondere eine UMTS-Verbindung und/oder eine GSM-Verbindung, verwendet wird. Solche Mobilfunknetze haben eine große Abdeckung und sind, beispielsweise im Bezug auf Internet-Informationen, ohnehin ausgebildet, Informationen bestimmter Server geeignet weiterzuleiten.

Wie bereits erwähnt, lässt sich das erfindungsgemäße Verfahren zweckmäßig in einer serverbasierten Architektur einsetzen. So kann vorgesehen sein, dass der Steuerungsparameter von einer kraftfahrzeugexternen Kommunikationseinrichtung, insbesondere einen Server, über die Kommunikationsverbindung gesendet wird. In diesem Fall ist also eine Kommunikationseinrichtung vorgesehen, die mit dem Kraftfahrzeug, insbesondere bidirektional, kommunizieren kann und dem Kraftfahrzeug den oder die Steuerungsparameter zur Verfügung stellt. Insbesondere dann, wenn es sich um den Abruf aktueller oder besonders reichhaltiger Informationen, insbesondere aus dem Internet, dreht, ist eine derartige serverbasierte Architektur vorteilhaft. So kann vorgesehen sein, dass die Kommunikationseinrichtung auch wenigstens einen Teil der Informationen über die Kommunikationsverbindung an das Kraftfahrzeug sendet und/oder von dem Fahrzeugsystem gesendete Daten empfängt. Beispielsweise können die von dem Fahrzeugsystem gesendeten Daten eine Anfrage nach bestimmten Informationen sein, die die Kommunikationseinrichtung dann, insbesondere gemeinsam mit dem Steuerungsparameter, an das Kraftfahrzeug und mithin das Fahrzeugsystem sendet.

So kann beispielsweise vorgesehen sein, dass bei Aktivierung der Funktionalität den Steuerparameter und eine Startinformation umfassende Daten von der Kommunikationseinrichtung an das Kraftfahrzeug gesendet werden. Wird die Funktionalität des Fahrzeugsystems also aktiviert, beispielsweise fahrerseitig aufgerufen, so sendet das Fahrzeugsystem über die oder eine weitere Kommunikationsverbindung eine entsprechende Anfrage an die Kommunikationseinrichtung, welche in Reaktion den Steuerparameter und eine Startinformation, beispielsweise eine zum Start der Funktionalität anzuzeigende Startseite, über die weitere Funktionen aufgerufen werden können, an das Kraftfahrzeug sendet. In konkreter Ausgestaltung können die Steuerparameter dabei als Metainformationen in einer XML- oder HTML-Seite enthalten sein. Es sei an dieser Stelle angemerkt, dass selbstverständlich auch bei einer solchen Ausgestaltung die Steuerungsparameter informations- bzw. funktionsspezifisch sein können, wenn sie beispielsweise als Auflistung in der XML- oder HTML-Seite enthalten sind.

Auch allgemein kann es vorteilhaft sein, wenn eine den Steuerungsparameter als Metainformation umfassende XML- oder HTML-Seite als Daten über die Kommunikationsverbindung gesendet werden. XML- oder HTML-Seiten bieten den Vorteil einer letztlich strukturierten Datei, die nicht nur eine Vielzahl von Parametern und Daten enthalten kann, sondern letztlich auch die Information bereit zur Anzeige umfassen kann. Auch Skriptbestandteile können in einer solchen XML- oder HTML-Seite enthalten sein.

In einer konkreten Ausführungsform kann also als Kommunikationseinrichtung ein Internetinformationen für die Anzeige im Kraftfahrzeug aufbereitender Server verwendet werden. Wie bereits eingangs erwähnt wurde, sind Internetinformationen häufig nicht geeignet, unmittelbar auf einer Darstellungsvorrichtung im Kraftfahrzeug dargestellt zu werden, so dass ein zwischengeschalteter Server als Kommunikationseinrichtung die Internetinformationen entsprechend aufbereiten kann, indem sie beispielsweise als eine kompakt formulierte XML- oder HTML-Seite von der Kommunikationseinrichtung an das Kraftfahrzeug über die Kommunikationsverbindung übertragen werden. Wie bereits erwähnt, stellen Metainformationen in solchen XML- oder HTML-Seiten einen eleganten Weg dar, den Steuerungsparameter mit den Internetinformationen gleich an das Kraftfahrzeug zu übermitteln. Es wird also der vom Server an das Kraftfahrzeug gesendete Inhalt, beispielsweise eine Nachrichtenseite, mit dem Steuerungsparameter versehen, welcher letztlich angibt, ob der Inhalt während der Fahrt angezeigt werden darf. Insbesondere kann dabei ein informations- oder funktionsspezifischer Steuerungsparameter vorgesehen werden. Wird beispielsweise das Angebot an Onlinefunktionen über die Laufzeit des Kraftfahrzeugs erweitert, so kann für jeden Inhalt neu und separat entschieden werden, ob und in welcher Form der Inhalt während der Fahrt sichtbar ist.

In einer besonders vorteilhaften Ausgestaltung der vorliegenden Erfindung kann vorgesehen sein, dass bei einer Informationen anzeigenden Funktionalität und einem wenigstens zwei Betriebszustände des Kraftfahrzeugs unterscheidenden Steuerungsparameter die Kommunikationseinrichtung anzuzeigende Informationen für mehr als einem Betriebszustand des Kraftfahrzeugs über die Kommunikationsverbindung an das Kraftfahrzeug sendet. Dies kann wiederum mit besonderem Vorteil bei einer kraftfahrzeugseitigen entsprechenden Anfrage bei der Kommunikationseinrichtung geschehen. Der Grundgedanke der vorliegenden Erfindung wird hiermit letztlich dadurch erweitert, dass in Abhängigkeit vom aktuellen Betriebszustand des Kraftfahrzeugs die Informationsdarstellung der Funktionalität bzw. einer bestimmten Funktion angepasst werden kann. Hierdurch ist es beispielsweise möglich, die mögliche Ablenkung des Fahrers zu minimieren, gleichzeitig aber die Funktion bzw. Information, gegebenenfalls eingeschränkt, auch während der Fahrt nutzbar zu halten. Werden beispielsweise XML- oder HTML-Seiten an das Kraftfahrzeug gesendet, um diese Informationen dann darzustellen, so kann vorgesehen sein, dass wenigstens zwei Versionen des Inhalts an das Kraftfahrzeug gesendet werden, wobei jede Version einem bestimmten Betriebszustand des Kraftfahrzeugs zugeordnet ist. Beispielsweise kann eine Version genutzt werden, die angezeigt wird, wenn der Betriebszustand des Kraftfahrzeugs die vollständige Nutzung der Funktion zulässt, und es kann eine zweite Version genutzt werden, die bei nur eingeschränkter Nutzung angezeigt wird. Eine solche eingeschränkte Version kann beispielsweise Bedienelemente umfassen, bei deren Betätigung eine akustische Wiedergabe von Informationen erfolgt oder dergleichen. So ist es folglich zusammenfassend möglich, die Darstellung von Informationen an die aktuelle Fahrsituation anzupassen, ohne dass hierfür ein erneuter Abruf von Inhalten durchgeführt werden muss. Bei Änderungen des Betriebszustands des Kraftfahrzeugs kann eine sofortige Abschaltung der Funktion bzw. eine sofortige Anpassung der Darstellung an den aktuellen Betriebszustand erfolgen.

Wie bereits mehrfach erwähnt, kann allgemein formuliert vorgesehen sein, dass die Funktionalität mehrere Funktionen und/oder Funktionsgruppen umfasst, wobei für jede Funktion und/oder Funktionsgruppe ein spezifischer Steuerungsparameter empfangen und verwendet wird. Es ist also durchaus möglich, innerhalb einer vorgegebenen Funktionalität - beispielsweise "Internet-Zugang" - noch zu unterscheiden, welche Informationen bzw. Informationseingaben während einer Fahrt bzw. in bestimmten Betriebszuständen des Kraftfahrzeugs noch zugänglich sein sollen. Beispielsweise können konkret auf die Fahrt bezogene Informationen, beispielsweise auf die Navigation des Kraftfahrzeugs bezogene Informationen, auch während der Fahrt noch weitgehend oder nur leicht eingeschränkt zur Verfügung stehen, während reine, beispielsweise stark textbasierte Entertainment-Informationen ganz oder größtenteils geblockt werden können. Auch kann beispielsweise die Eingabe von Fahrtzielen während der Fahrt noch - insbesondere in einer vereinfachten Eingabeoberfläche - erlaubt sein, während die Anwahl von Musikstücken oder dergleichen eingeschränkt werden kann. Auch hier sind mithin verschiedenste Ausgestaltungen denkbar, da durch die beschriebenen funktionsspezifischen bzw. funktionsgruppenspezifischen Steuerungsparameter eine große Flexibilität und Anpassbarkeit der Funktionalität des Fahrzeugsystems gegeben ist.

Wie bereits erwähnt, ist der Steuerungsparameter auf den Betriebszustand des Kraftfahrzeugs bezogen, d. h., er ermöglicht letztlich die Unterscheidung von für die Funktionalität oder eine bestimmte Funktion oder Funktionsgruppe relevanten Betriebszuständen des Kraftfahrzeugs. Um die notwendige Verknüpfung mit dem aktuellen Betriebszustand des Kraftfahrzeugs herzustellen, kann vorgesehen sein, dass zur Steuerung des Fahrzeugsystems der Steuerungsparameter mit wenigstens einem die aktuelle Fahrsituation, insbesondere die Fahrdynamik, des Kraftfahrzeugs beschreibenden Wert verknüpft wird und die Steuerung abhängig von dem Verknüpfungsergebnis erfolgt. Die Verknüpfung kann dabei zweckmäßigerweise wenigstens einen Vergleich enthalten. Es werden also aktuelle, die Fahrdynamik des Kraftfahrzeugs beschreibende Werte, insbesondere Messdaten, in Beziehung zu dem Steuerparameter gesetzt, um abhängig von dem Verknüpfungsergebnis die tatsächliche Steuerung vorzunehmen.

Dabei kann vorgesehen sein, dass der Steuerungsparameter eine Grenzgeschwindigkeit ist und/oder der Wert die aktuelle Geschwindigkeit des Kraftfahrzeugs ist. Eine solche Grenzgeschwindigkeit kann beispielsweise angeben, bis zu welchem Wert der Geschwindigkeit eine Funktion der Funktionalität überhaupt genutzt werden darf bzw. ab welcher Geschwindigkeit sie nur noch eingeschränkt zur Verfügung steht oder dergleichen. Die Verknüpfung kann dabei ein einfacher Vergleich der aktuellen Geschwindigkeit des Kraftfahrzeugs mit der Grenzgeschwindigkeit sein.

Mit besonderem Vorteil kann vorgesehen sein, dass anhand der Verknüpfung zwischen wenigstens zwei Wiedergabemodi und/oder Eingabemodi bezüglich der Informationen unterschieden wird. Wie bereits oben bezüglich der mehreren Versionen von Informationen, die von einer Kommunikationseinrichtung gesendet werden können, angedeutet, ist es also denkbar, den Funktionsumfang konkret auf den aktuellen Betriebszustand des Kraftfahrzeugs abzustimmen, indem beispielsweise bei stillstehendem Kraftfahrzeug eine vollständige Textversion mit Bildern aus dem Internet angezeigt werden kann, während bei hohen Geschwindigkeiten lediglich noch ein Vorlesen mit einer Überschrift zur Verfügung gestellt wird. Auch bezüglich der Eingabe sind solche unterschiedlichen Modi denkbar, indem beispielsweise während der Fahrt eine im Kraftfahrzeug vorgesehene Tastatur oder dergleichen nicht mehr nutzbar ist, sondern eine Eingabe lediglich noch über eine Sprachsteuerung oder dergleichen erfolgen kann, die den Fahrer weniger von der Fahraufgabe ablenkt. Ersichtlich ergeben sich eine Vielzahl von Möglichkeiten, die Funktionalität und ihre Funktionen/Informationen an den aktuellen Betriebszustand des Kraftfahrzeugs anzupassen. Konkret kann beispielsweise vorgesehen sein, dass wenigstens ein Wiedergabemodus und/oder Eingabemodus, in dem die Information wenigstens teilweise wiedergegeben werden und/oder eingebbar sind, und/oder ein Wiedergabemodus und/oder Eingabemodus, in dem die Information nicht wiedergegeben werden oder nicht eingebbar sind, verwendet wird.

Um jeweils sowohl den aktuellen Betriebszustand des Kraftfahrzeugs zu berücksichtigen bzw. die aktuell empfangenen Steuerungsparameter in Betracht ziehen zu können, sollte eine regelmäßige Aktualisierung des Verknüpfungsergebnisses vorgesehen sein. Hierzu kann das Verknüpfungsergebnis bei einem neu vorliegenden Wert und/oder bei einem neu vorliegenden Steuerungsparameter und/oder bei einer Bedienaktion des Benutzers und/oder intermittierend aktualisiert werden. Beispielsweise kann also dann, wenn der Wert aktuell vorliegt, immer auch das Verknüpfungsergebnis aktualisiert werden. Beispielsweise kann ein Geschwindigkeitssensor des Kraftfahrzeugs in bestimmten Zeitabständen, das bedeutet, in einer bestimmten Frequenz, einen aktuellen Wert für die Geschwindigkeit des Kraftfahrzeugs zur Verfügung stellen, wobei immer dann, wenn der neue aktuelle Wert erhalten wird, auch das Verknüpfungsergebnis aktualisiert wird. Es sei im Übrigen darauf hingewiesen, dass, werden zwei Wiedergabemodi verwendet oder dergleichen, selbstverständlich nach einer Aktualisierung des Verknüpfungsergebnisses auch eine Veränderung einer Anzeige vorgenommen werden kann, um auf den aktuellen Betriebszustand des Kraftfahrzeugs anzupassen. Das Verknüpfungsergebnis kann auch immer dann aktualisiert werden, wenn ein neuer Steuerungsparameter vorliegt, das bedeutet, der Steuerungsparameter neu empfangen wurde. Andere denkbare Aktualisierungsbedingungen sind eine Bedienaktion des Benutzers oder gar eine grundsätzlich intermittierend in bestimmten Zeitabständen erfolgende Aktualisierung.

Es ist auch ein Kraftfahrzeug mit einem wenigstens eine Informationen an einen Fahrer ausgebende und/oder Informationen von einem Fahrer entgegennehmende Funktionalität aufweisenden Fahrzeugsystem, insbesondere also einem Infotainment-System, denkbar, welches zur Durchführung des erfindungsgemäßen Verfahrens in einer der vorangehend beschriebenen Ausgestaltungen ausgebildet ist. Sämtliche Ausführungen bezüglich des erfindungsgemäßen Verfahrens lassen sich analog auf das Kraftfahrzeug übertragen, so dass auch hier die Vorteile der vorliegenden Erfindung erhalten werden können.

Insbesondere kann dem Fahrzeugsystem dabei eine Darstellungsvorrichtung und/oder eine Eingabevorrichtung zugeordnet sein, über die die Darstellung von Informationen bzw. die Eingabe von Informationen erfolgen. Weiterhin umfasst das Kraftfahrzeug, gegebenenfalls ebenso dem Fahrzeugsystem zugeordnet, eine Empfangsvorrichtung, über die der Steuerungsparameter über die Kommunikationsverbindung empfangen werden kann. Ist die Kommunikationsverbindung bidirektional, so kann vorgesehen sein, dass sogar eine Sende- und Empfangsvorrichtung vorgesehen ist. Es kann ferner im Übrigen eine Verknüpfungseinrichtung, gegebenenfalls als Teil des Fahrzeugsystems, vorgesehen sein, die wenigstens einen die Fahrdynamik des Kraftfahrzeugs beschreibenden Wert ermittelt und die Verknüpfung, insbesondere den Vergleich, mit dem Steuerungsparameter vornimmt.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein Kraftfahrzeug,
- Fig. 2: ein System zur Durchführung des erfindungsgemäßen Verfahrens,
- Fig. 3: erste mögliche Darstellungen von Informationen, und
- Fig. 4: zweite mögliche Darstellungen von Informationen.

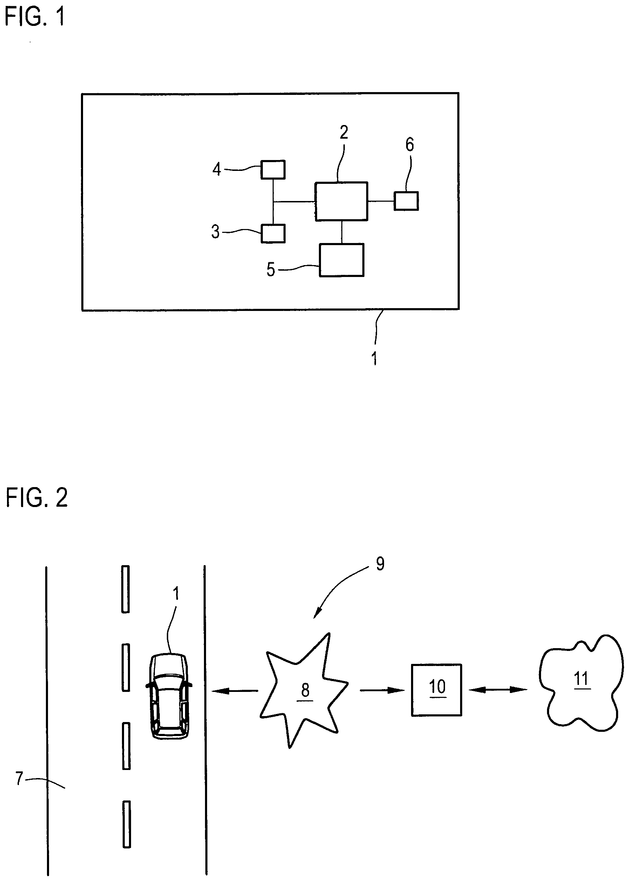

Fig. 1 zeigt ein Kraftfahrzeug 1. Es umfasst als Fahrzeugsystem 2 ein Infotainment-System, welches eine Internet-Funktionalität aufweist. Das bedeutet, es ist einem Fahrer möglich, aus dem Kraftfahrzeug 1 heraus auf bestimmte Internetinformationen zuzugreifen. Zur Darstellung der Internetinformationen ist dem Fahrzeugsystem eine Darstellungsvorrichtung 3, hier ein Bildschirm eines Mensch-Maschine-Interfaces, zugeordnet, zur Eingabe bestimmter Anfragen ist eine Eingabevorrichtung 4, die beispielsweise Tasten, aber auch einen Touchscreen und dergleichen umfassen kann, vorgesehen. Über beispielsweise ein Bus-System, insbesondere ein CAN-Bus, steht das Fahrzeugsystem 2 mit weiteren Fahrzeugsystemen in Kommunikation, vorliegend mit einer Sende- und Empfangsvorrichtung 5 und einem Geschwindigkeitssensor 6. Der Geschwindigkeitssensor 6 liefert einen Wert für die aktuelle Fahrzeuggeschwindigkeit an das Fahrzeugsystem 2.

Bevor die grundsätzliche Funktionsweise der Internet-Funktionalität näher erläutert wird, soll die auch für das erfindungsgemäße Verfahren verwendete serverbasierte Infrastruktur mit Hilfe des in Fig. 2 dargestellten Systems näher erläutert werden. Dort ist das Kraftfahrzeug 1 während der Fahrt auf einer Straße 7 gezeigt. Soll die Internet-Funktionalität des Fahrzeugsystems 2 genutzt werden, so wird über ein Mobilfunknetz eine Kommunikationsverbindung 9, welche bidirektional ist, zu einer Kommunikationseinrichtung 10, hier einem Server für die Anbindung, aufgebaut. Die Kommunikationseinrichtung 10 ist dazu ausgebildet, Internetinformationen aus dem Internet 11 so aufzubereiten, dass sie, an das Kraftfahrzeug 1 gesendet, auf der Darstellungsvorrichtung 3 angezeigt werden können.

Wird also die Internet-Funktionalität des Fahrzeugsystems 2 aktiviert, so wird die Kommunikationsverbindung 9 aufgebaut und das Kraftfahrzeug 1 sendet über die Sende- und Empfangsvorrichtung 5 eine Anfrage an die Kommunikationseinrichtung 10. Die Kommunikationseinrichtung 10 sendet wiederum in Antwort eine Startinformation, hier eine Startseite im HTML-Format, an das Kraftfahrzeug 1, über die der Fahrer, wenn sie angezeigt wird, verschiedene Funktionen der Funktionalität aufrufen kann, beispielsweise aktuelle Nachrichten, Navigationsdienste und dergleichen. Entsprechend vom Fahrer getätigten Eingaben können dann grundsätzlich weitere Informationen bezüglich dieser Funktionen der Internet-Funktionalität von der Kommunikationseinrichtung 10 angefordert werden, welche die Daten aus dem Internet 11 aufbereitet und diese Informationen senden kann.

Die im Folgenden beschriebenen Ausführungsformen des erfindungsgemäßen Verfahrens erlauben es jedoch zusätzlich, dass über die Kommunikationsverbindung 9 ein die Verfügbarkeit und/oder den Umfang der Funktionalität während einer Fahrt betreffender, auf den Betriebszustand des Kraftfahrzeugs 1 bezogener Steuerungsparameter empfangen wird und bei der Steuerung des Fahrzeugsystems 2 berücksichtigt wird. In den vorliegenden Ausführungsbeispielen wird eine Grenzgeschwindigkeit als Steuerungsparameter übermittelt. Diese Grenzgeschwindigkeit wird mit der von dem Geschwindigkeitssensor 6 gelieferten aktuellen Geschwindigkeit des Kraftfahrzeugs 1 verknüpft, vorliegend verglichen. Abhängig von dem Verknüpfungsergebnis, hier also einem Vergleichsergebnis, erfolgt dann die Steuerung des Fahrzeugsystems 2 über die anzuzeigenden Internetinformationen bzw. die Eingabemöglichkeiten des Fahrers. Es sei bereits an dieser Stelle darauf hingewiesen, dass das Verknüpfungsergebnis im hier vorliegenden Fall ständig aktuell gehalten wird, das bedeutet, sobald ein neuer aktueller Wert für die Geschwindigkeit des Kraftfahrzeugs 1 vorliegt, wird ein erneuter Vergleich durchgeführt und das Verknüpfungsergebnis wird aktualisiert. Selbstverständlich sind grundsätzlich auch andere Varianten denkbar, in denen das Verknüpfungsergebnis beispielsweise bei Empfang eines Störungsparameters aktualisiert wird oder bei einer Bedienaktion des Benutzers, grundsätzlich denkbar ist aber auch eine in fest vorgegebenen Zeitabständen erfolgende intermittierende Aktualisierung des Verknüpfungsergebnisses.

Wie bereits erwähnt, weist die Internet-Funktionalität des Fahrzeugsystems 2 mehrere Funktionen auf, denen im vorliegenden Ausführungsbeispiel jeweils ein eigener Steuerungsparameter, das bedeutet, eine eigene Grenzgeschwindigkeit zugeordnet ist. Die Ausgestaltung ist dabei so, dass als die oben bereits erwähnte Startinformation, die von der Kommunikationseinrichtung 10 über die Kommunikationsverbindung 9 an das Kraftfahrzeug 1 gesendet wird, eine HTML-Seite übermittelt wird, in der die Steuerparameter für alle Funktionen als Metainformationen enthalten sind. Das bedeutet also, dass letztlich zu Beginn der Nutzung der Internet-Funktionalität die Steuerungsparameter für alle Funktionen der Internet-Funktionalität mit der Startinformation erhalten werden.

Nichtsdestotrotz ist es alternativ in einer anderen Ausführungsform selbstverständlich genauso möglich, dass der funktions- bzw. informationsspezifische Steuerungsparameter mit den jeweils von der Kommunikationseinrichtung 10 an das Kraftfahrzeug übermittelten Internetinformationen übertragen wird. Werden diese Internetinformationen ebenso als HTML-Seiten übertragen, so kann der Steuerungsparameter dort auch als eine Metainformation enthalten sein.

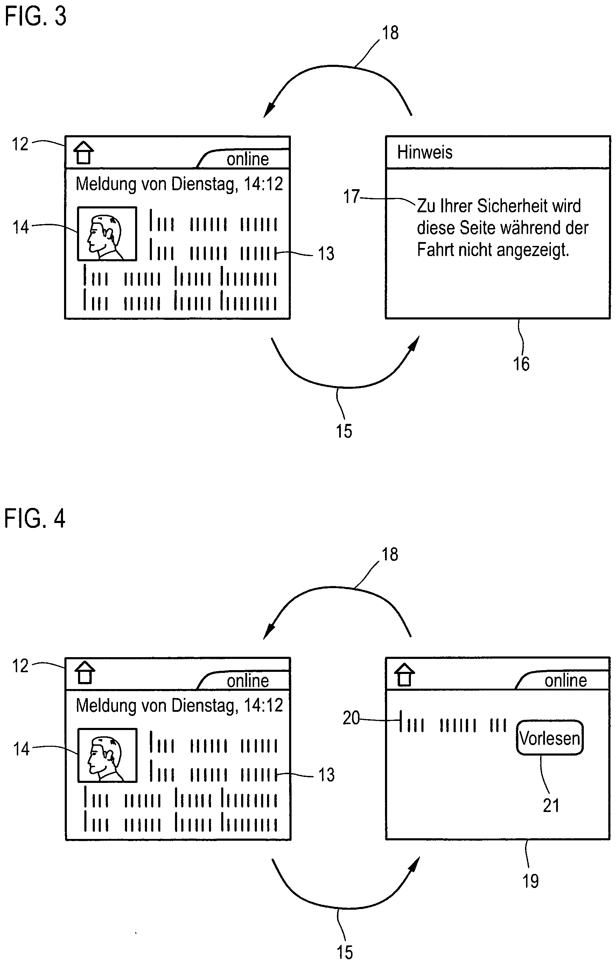

Über die Fig. 3 und 4 sollen nun zwei Ausführungsbeispiele des erfindungsgemäßen Verfahrens näher erläutert werden. Im durch Fig. 3 näher erläuterten Ausführungsbeispiel sei beispielhaft eine Funktion verwendet, die aktuelle Nachrichten anzeigen soll. Ihr Steuerungsparameter, also die Grenzgeschwindigkeit, soll für dieses Beispiel 5 km/h betragen, so dass die aktuellen Nachrichten angezeigt werden sollen, wenn sich das Kraftfahrzeug 1 langsamer als 5 km/h bewegt, was einem ersten Betriebszustand entspricht, und in diesem Ausführungsbeispiel die Informationen nicht mehr angezeigt werden sollen, wenn das Kraftfahrzeug genau oder schneller als 5 km/h fährt.

In diesem ersten Ausführungsbeispiel übersendet die Kommunikationseinrichtung 10 auf Anfrage nur eine aufbereitete Version der gewünschten Internetinformationen an das Kraftfahrzeug 1, wobei abhängig vom Verknüpfungsergebnis eine der beiden in Fig. 3 gezeigten Anzeigen erfolgt.

In Fig. 3 links ist beispielhaft eine Anzeige 12 der Internetinformationen zu sehen, wenn sich das Kraftfahrzeug 1 langsamer als mit 5 km/h bewegt. Ersichtlich wird vollständig der Text 13 der Nachricht mit einem Bild 14 dargestellt. Der Fahrer kann nun die Internetinformation lesen.

Beträgt die Geschwindigkeit größer als 5 km/h oder steigt sie auf einen Wert größer als 5 km/h, Pfeil 15, so werden die Internetinformationen nicht mehr angezeigt, sondern es wird ein anderer Wiedergabemodus gewählt, in dem die in Fig. 3 rechts gezeigte Anzeige 16 auf der Darstellungsvorrichtung 3 gezeigt wird. Die Internetinformationen werden nicht dargestellt, sondern lediglich ein Hinweis 17: "Zu Ihrer Sicherheit wird diese Seite während der Fahrt nicht angezeigt". Die Funktion steht also bei Geschwindigkeiten größer als 5 km/h nicht zur Verfügung. Sinkt die Geschwindigkeit wieder unter 5 km/h, Pfeil 18, so wird nach einer entsprechenden Veränderung des Verknüpfungsergebnisses wieder die Anzeige 12 dargestellt, der Hinweis 17 verschwindet.

Fig. 4 zeigt ein bevorzugtes Ausführungsbeispiel der vorliegenden Erfindung, in dem letztlich eine Anpassung an den aktuellen Betriebszustand des Kraftfahrzeugs 1 erfolgt. Dabei werden von der Kommunikationseinrichtung 10 zwei Versionen einer HTML-Seite geschickt, die den verschiedenen, durch den Steuerungsparameter unterscheidbaren Betriebszuständen des Kraftfahrzeugs 1 zugeordnet sind. Während bei niedrigen Geschwindigkeiten, also bei Geschwindigkeiten unter 5 km/h, erneut die Anzeige 12 wie in Fig. 3 angezeigt wird, wird die Funktion bei Geschwindigkeiten gleich oder oberhalb 5 km/h nun jedoch nicht vollständig geblockt, sondern es wird die zweite Version der HTML-Seite angezeigt, wie durch die Anzeige 19 auf der rechten Seite der Fig. 4 illustriert wird. Ersichtlich wird dort nun die Überschrift 20 der Meldung in großer Schrift angezeigt, während zudem ein Bedienelement 21 eingeblendet wird, bei dessen Betätigung die zur Überschrift 20 gehörige Nachricht automatisch vorgelesen werden kann. Erneut wird, wie bereits beim ersten Ausführungsbeispiel, zwischen den Anzeigen 12 und 19 gewechselt, wenn sich das Verknüpfungsergebnis ändert.

Das zweite Ausführungsbeispiel, wie es durch Fig. 4 erläutert wird, ermöglicht es also, die Darstellung der Internetinformationen bestimmter Funktionen an die aktuelle Fahrsituation, also den aktuellen Betriebszustand des Kraftfahrzeugs, anzupassen. Dafür ist kein erneuter Abruf von Inhalten nötig, da die Kommunikationseinrichtung 10 bereits zwei verschiedenen Versionen übermittelt. Bei Änderung des Betriebszustands des Kraftfahrzeugs 1 kann mithin eine sofortige Anpassung der Darstellung an den aktuellen Betriebszustand erfolgen, bzw., in Bezug auf Fig. 3 eine sofortige Abschaltung der Funktion durchgeführt werden.

Es sei an dieser Stelle angemerkt, dass selbstverständlich, insbesondere bei Verwendung mehrerer Steuerungsparameter, auch eine größere Zahl von Betriebszuständen des Kraftfahrzeugs unterschieden werden kann und die Informationsdarstellung bzw. auch die Informationseingabe entsprechend eingepasst werden kann.

## Patentansprüche

1. Verfahren zum Betrieb eines wenigstens eine Informationen an einen Fahrer ausgebende und/oder Informationen von einem Fahrer entgegennehmende Funktionalität aufweisenden Fahrzeugsystems (2) eines Kraftfahrzeugs (1),
**dadurch gekennzeichnet,**
**dass** wenigstens ein die Verfügbarkeit und/oder den Umfang der Funktionalität während einer Fahrt betreffender, auf den Betriebszustand des Kraftfahrzeugs (1) bezogener Steuerungsparameter über eine Kommunikationsverbindung (9) empfangen und bei der Steuerung des Fahrzeugsystems (2) berücksichtigt wird, wobei der Steuerungsparameter die Unterscheidung von für die Funktionalität oder eine bestimmte Funktion oder Funktionsgruppe relevanten Betriebszuständen des Kraftfahrzeugs ermöglicht.

2. Verfahren nach Anspruch 1,
**dadurch gekennzeichnet,**
**dass** der Steuerungsparameter über die Kommunikationsverbindung (9) kontinuierlich zur Verfügung gestellt wird und/oder zu Beginn der Nutzung einer Funktionalität empfangen wird und/oder mit einem, insbesondere jedem, Datensatz, insbesondere mit einer auszugebenden Information, insbesondere informationsspezifisch, empfangen wird.

3. Verfahren nach Anspruch 1 oder 2,
**dadurch gekennzeichnet,**
**dass** der Steuerungsparameter von einer kraftfahrzeugexternen Kommunikationseinrichtung (10), insbesondere einem Server, über die Kommunikationsverbindung (9) gesendet wird.

4. Verfahren nach Anspruch 3,
**dadurch gekennzeichnet,**
**dass** die Kommunikationseinrichtung (10) auch wenigstens einen Teil der Informationen über die Kommunikationsverbindung (9) an das Kraftfahrzeug (1) sendet und/oder von dem Fahrzeugsystem (2) gesendete Daten empfängt.

5. Verfahren nach Anspruch 3 oder 4,
**dadurch gekennzeichnet,**
**dass** bei Aktivierung der Funktionalität den Steuerparameter und eine Startinformation umfassende Daten von der Kommunikationseinrichtung (10) an das Kraftfahrzeug (1) gesendet werden.

6. Verfahren nach einem der Ansprüche 3 bis 5,
**dadurch gekennzeichnet,**
**dass** eine den Steuerparameter als Metainformationen umfassende XML- oder HTML-Seite als Daten gesendet werden.

7. Verfahren nach einem der Ansprüche 3 bis 6,
**dadurch gekennzeichnet,**
**dass** als Kommunikationseinrichtung (10) ein Internetinformationen für die Anzeige im Kraftfahrzeug (1) aufbereitender Server verwendet wird.

8. Verfahren nach einem der Ansprüche 3 bis 7,
**dadurch gekennzeichnet,**
**dass** bei einer Informationen anzeigenden Funktionalität und einem wenigstens zwei Betriebszustände des Kraftfahrzeugs (1) unterscheidenden Steuerungsparameter die Kommunikationseinrichtung (10) anzuzeigende Informationen für mehr als einen Betriebszustand des Kraftfahrzeugs (1) über die Kommunikationsverbindung (9) an das Kraftfahrzeug (1) sendet.

9. Verfahren nach einem der vorangehenden Ansprüche,
**dadurch gekennzeichnet,**
**dass** die Funktionalität mehrere Funktionen und/oder Funktionsgruppen umfasst, wobei für jede Funktion und/oder Funktionsgruppe ein spezifischer Steuerungsparameter empfangen und verwendet wird.

10. Verfahren nach einem der vorangehenden Ansprüche,
**dadurch gekennzeichnet,**
**dass** zur Steuerung des Fahrzeugsystems (2) der Steuerungsparameter mit wenigstens einem die aktuelle Fahrsituation, insbesondere die Fahrdynamik, des Kraftfahrzeugs (1) beschreibenden Wert verknüpft wird und die Steuerung abhängig von dem Verknüpfungsergebnis erfolgt.

11. Verfahren nach Anspruch 10,
**dadurch gekennzeichnet,**
**dass** der Steuerungsparameter eine Grenzgeschwindigkeit ist und/oder der Wert die aktuelle Geschwindigkeit des Kraftfahrzeugs (1) ist.

12. Verfahren nach Anspruch 10 oder 11,
**dadurch gekennzeichnet,**
**dass** anhand der Verknüpfung zwischen wenigstens zwei Wiedergabemodi und/oder Eingabemodi bezüglich der Informationen unterschieden wird.

13. Verfahren nach Anspruch 12,
**dadurch gekennzeichnet,**
**dass** wenigstens ein Wiedergabemodus und/oder Eingabemodus, in dem die Informationen wenigstens teilweise wiedergegeben werden und/oder eingebbar sind, und/oder ein Wiedergabemodus und/oder Eingabemodus, in dem die Informationen nicht wiedergegeben werden oder nicht eingebbar sind, verwendet wird.

14. Verfahren nach einem der Ansprüche 10 bis 13,
**dadurch gekennzeichnet,**
**dass** das Verknüpfungsergebnis bei einem neu vorliegenden Wert und/oder bei einem neu vorliegenden Steuerungsparameter und/oder bei einer Bedienaktion des Benutzers und/oder intermittierend aktualisiert wird.

## Claims

1. Method for operating a vehicle system (2) of a vehicle (1), comprising at least one functionality outputting information to a driver and/or receiving information from a driver,
**characterised in that**
at least one control parameter relating to the operational state of the vehicle (1), concerning the availability and/or the scope of the functionality during a journey, is received via a communication connection (9) and is taken into account in the control of the vehicle system (2), wherein the control parameter makes it possible to distinguish operational states of the vehicle relevant to the functionality or a specific function or group of functions.

2. Method according to claim 1,
**characterised in that**
the control parameter is continuously made available via the communication connection (9) and/or is received at the start of the utilisation of a functionality and/or is received in particular in an information-specific manner with a data set, in particular with each data set, in particular with information to be output.

3. Method according to claim 1 or 2,
**characterised in that**
the control parameter is sent from a vehicle-external communication device (10), in particular from a server, via the communication connection (9).

4. Method according to claim 3,
**characterised in that**
the communication device (10) also sends at least part of the information via the communication connection (9) to the vehicle (1) and/or receives data sent from the vehicle system (2).

5. Method according to claim 3 or 4,
**characterised in that**
in the activation of the functionality, data including the control parameter and a start information are sent from the communication device (10) to the vehicle (1).

6. Method according to any one of claims 3 to 5,
**characterised in that**
a XML or HTML file containing the control parameter as meta information is sent as data.

7. Method according to any one of claims 3 to 6,
**characterised in that**
as communication device (10) a server editing internet information for the display in the vehicle (1) is used.

8. Method according to any one of claims 3 to 7,
**characterised in that**
in the case of a functionality displaying information and a control parameter distinguishing at least two operating states of the vehicle (1), the communication device (10) sends information to be displayed for more than one operating state of the vehicle (1) via the communication connection (9) to the vehicle (1).

9. Method according to any one of the preceding claims,
**characterised in that**
the functionality includes several functions and/or groups of functions, wherein a specific control parameter is received and used for each function and/or group of functions.

10. Method according to any one of the preceding claims,
**characterised in that**
to control the vehicle system (2) the control parameter is coupled to at least one value describing the current driving situation, in particular the driving dynamics, of the vehicle (1) and the control is carried out depending on the coupling result.

11. Method according to claim 10,
**characterised in that**
the control parameter is a limiting velocity and/or the value is the current velocity of the vehicle (1).

12. Method according to claim 10 or 11,
**characterised in that**
a distinction is made as regards the information on the basis of the coupling between at least two playback modes and/or input modes.

13. Method according to claim 12,
**characterised in that**
there is used at least one playback mode and/or input mode in which the information can be at least partially played back and/or input, and/or a playback mode and/or input mode in which the information cannot be played back or cannot be input.

14. Method according to any one of claims 10 to 13,
**characterised in that**
the coupling result is updated with a newly available value and/or with a newly available control parameter and/or with an operating action of the user and/or is intermittently updated.

## Revendications

1. Procédé pour faire fonctionner un système de véhicule (2) d'un véhicule automobile (1) qui comporte au moins une fonctionnalité fournissant des informations à un conducteur et/ou acceptant des informations d'un conducteur,
**caractérisé en ce qu'**au moins un paramètre de commande qui concerne la disponibilité et/ou l'étendue de la fonctionnalité pendant un trajet et qui se rapporte à l'état de fonctionnement du véhicule automobile (1) est reçu par l'intermédiaire d'une liaison de communication (9) et est pris en compte lors de la commande du système de véhicule (2), le paramètre de commande permettant de faire la différence entre des états de fonctionnement du véhicule automobile qui sont déterminants pour la fonctionnalité ou pour une certaine fonction ou un certain groupe de fonctions.

2. Procédé selon la revendication 1, **caractérisé en ce que** le paramètre de commande est mis à disposition de façon continue par l'intermédiaire de la liaison de communication (9) et/ou est reçu au début de l'utilisation d'une fonctionnalité et/ou est reçu avec un ensemble de données, en particulier avec chaque ensemble de données, en particulier avec une information à délivrer, en particulier de manière spécifique à l'information.

3. Procédé selon la revendication 1 ou 2, **caractérisé en ce que** le paramètre de commande est envoyé par un dispositif de communication (10) extérieur au véhicule automobile, en particulier par un serveur, par l'intermédiaire de la liaison de communication (9).

4. Procédé selon la revendication 3, **caractérisé en ce que** le dispositif de communication (10) envoie aussi au moins une partie des informations par l'intermédiaire de la liaison de communication (9) au véhicule automobile (1) et/ou reçoit des données envoyées par le système de véhicule (2).

5. Procédé selon la revendication 3 ou 4, **caractérisé en ce que**, lors de l'activation de la fonctionnalité, des données comprenant le paramètre de commande et une information de début sont envoyées par le dispositif de communication (10) au véhicule automobile (1).

6. Procédé selon l'une des revendications 3 à 5, **caractérisé en ce qu'**une page XML ou HTML comprenant le paramètre de commande en tant que métainformations est envoyée comme données.

7. Procédé selon l'une des revendications 3 à 6, **caractérisé en ce qu'**un serveur préparant des informations internet en vue de leur affichage dans le véhicule automobile (1) est utilisé en tant que dispositif de communication (10).

8. Procédé selon l'une des revendications 3 à 7, **caractérisé en ce que**, dans le cas d'une fonctionnalité affichant des informations et dans le cas d'un paramètre de commande distinguant au moins deux états de fonctionnement du véhicule automobile (1), le dispositif de communication (10) envoie au véhicule automobile (1), par l'intermédiaire de la liaison de communication (9), des informations à afficher pour plus d'un état de fonctionnement du véhicule automobile (1).

9. Procédé selon l'une des revendications précédentes, **caractérisé en ce que** la fonctionnalité comprend plusieurs fonctions et/ou groupes de fonctions, un paramètre de commande spécifique étant reçu et utilisé pour chaque fonction et/ou groupe de fonctions.

10. Procédé selon l'une des revendications précédentes, **caractérisé en ce que**, en vue de la commande du système de véhicule (2), le paramètre de commande est combiné à au moins une valeur qui décrit la situation de conduite actuelle, en particulier la dynamique de conduite, du véhicule automobile (1) et la commande s'effectue en fonction du résultat de combinaison.

11. Procédé selon la revendication 10, **caractérisé en ce que** le paramètre de commande est une vitesse limite et/ou la valeur est la vitesse actuelle du véhicule automobile (1).

12. Procédé selon la revendication 10 ou 11, **caractérisé en ce que**, à l'aide de la combinaison, on fait la différence entre au moins deux modes de reproduction et/ou deux modes d'entrée pour ce qui est des informations.

13. Procédé selon la revendication 12, **caractérisé en ce qu'**au moins un mode de reproduction et/ou un mode d'entrée, dans lequel les informations peuvent être au moins partiellement reproduites et/ou entrées, et/ou un mode de reproduction et/ou un mode d'entrée, dans lequel les informations ne peuvent pas être reproduites et/ou entrées, est utilisé.

14. Procédé selon l'une des revendications 10 à 13, **caractérisé en ce que** le résultat de combinaison est actualisé en présence d'une nouvelle valeur et/ou en présence d'un nouveau paramètre de commande et/ou en présence d'une action de commande de l'utilisateur et/ou de façon intermittente.
